# EUROPÄISCHE PATENTSCHRIFT

(11) **EP 1 124 867 B1**
(45) Veröffentlichungstag und Bekanntmachung des Hinweises auf die Patenterteilung: **11.08.2004**
(21) Anmeldenummer: 99947368.9
(22) Anmeldetag: 16.09.1999
(51) Int. Cl.: C08F 36/04, C08F 4/44, C08F 4/48

(54) **VERFAHREN ZUR ANIONISCHEN POLYMERISATION VON DIENEN**
METHOD FOR THE ANIONIC POLYMERISATION OF DIENES
PROCEDE DE POLYMERISATION ANIONIQUE DE DIENES

(30) Priorität: 24.09.1998 DE 19843687
(43) Veröffentlichungstag der Anmeldung: 22.08.2001
(73) Patentinhaber: BASF AKTIENGESELLSCHAFT, 67056 Ludwigshafen (DE)
(72) Erfinder: JÜNGLING, Stephan, D-68165 Mannheim (DE); SCHADE, Christian, D-67061 Ludwigshafen (DE); GAUSEPOHL, Hermann, D-67112 Mutterstadt (DE); WARZELHAN, Volker, D-67273 Weisenheim (DE); DESBOIS, Philippe, D-67487 Maikammer (DE); FONTANILLE, Michel, F-33400 Talence (FR); DEFFIEUX, Alain, F-33200 Bordeaux (FR)
(86) Internationale Anmeldenummer: PCT/EP1999/006863
(87) Internationale Veröffentlichungsnummer: WO 2000/017246

(56) Entgegenhaltungen:
- WO-A-98/07765
- US-A- 3 847 883
- US-A- 4 429 090

## Beschreibung

Die Erfindung betrifft ein verfahren zur anionischen Polymerisation von Dienen in einem aliphatischen, isocyclischen oder aromatischen Kohlenwasserstoff oder Kohlenwasserstoffgemisch als Lösungsmittel in Gegenwart eines lithiumorganischen Polymerisationsinitiators und einer in dem Kohlenwasserstoff löslichen Dialkylmagnesiumverbindung.

Die anionische Polymerisation verläuft in der Regel sehr schnell, so daß eine Kontrolle wegen der beträchtlichen Wärmeentwicklung im technischen Maßstab schwierig wird. Erniedrigt man die Polymerisationstemperatur, so steigt die Viskosität insbesondere bei konzentrierten Lösungen zu stark an. Eine Verringerung der Initiatorkonzentration erhöht das Molekulargewicht des gebildeten Polymers. Eine Kontrolle der Reaktion durch eine entsprechende Verdünnung der Monomeren führt zu einem höheren Lösemittelbedarf und zu geringeren Raum-Zeitausbeuten.

Es wurden daher verschiedene Zusätze zu den anionischen Polymerisationsinitiatoren vorgeschlagen, die die Polymerisationsgeschwindigkeit beeinflussen.

Hsieh und Wang untersuchen in Macromolecules, Vol 19 (1966), Seite 299 bis 304 die Komplexbildung von Dibutylmagnesium mit dem Alkyllithiuminitiator bzw. der lebenden Polymerkette in Anwesenheit und Abwesenheit von Tetrahydrofuran und finden, daß Dibutylmagnesium die Polymerisationsgeschwindigkeit von Styrol und Butadien herabsetzt, ohne die Stereochemie zu beeinflussen.

Aus der US-Patentschrift 3 716 495 sind Initatorzusammensetzungen für die Polymerisation von konjugierten Dienen und Vinylaromaten bekannt, bei denen eine effektivere Nutzung des Lithiumalkyls als Initiator durch den Zusatz eines Metallalkyls eines Metalls der Gruppe 2a, 2b oder 3a des Periodensystems, wie beispielsweise Diethylzink und polare Verbindungen wie Ether oder Amine erreicht wird. Aufgrund der notwendigen hohen Lösungsmittelmengen, relativ niedrigen Temperaturen und langen Reaktionszeiten im Bereich von einigen Stunden sind die Raum-Zeit-Ausbeuten entsprechend niedrig.

Die WO97/33923 beschreibt Initatorzusammensetzungen für die anionische Polymerisation von Vinylmonomeren, die Alkali und Magnesiumverbindungen mit Kohlenwasserstoffresten enthalten und ein molares Verhältnis von [Mg]/[Alkalimetall] von mindestens 4 aufweisen.

Die Patentanmeldung WO 98/07765 beschreibt kontinuierliche Verfahren zur anionischen Polymerisation oder Copolymerisation von Styrol- oder Dienmonomeren mit Alkalimetallalkyl als Polymerisationsauslöser in Gegerwart eines mindestens zweiwertig auftretenden Elements als Geschwindigkeitsregler.

Die Patentanmeldung WO 98/07766 beschreibt Verfahren zur anionisehen Polymerisation von Dienen und/oder vinylaromatischen Monomeren in einem vinylaromatischen Monomer oder Monomerengemisch in Gegenwart eines Metallalkyls oder -aryls eines mindestens zweiwertig auftretenden Elements ohne Zusatz von Lewisbasen.

US 3,847,883 beschreibt die Herstellung von Komplexen aus Organomagnesiumverbindungen und Organometallverbindungen von Metallen der 1. Hauptgruppe. Die in Kohlenwasserstoffen löslichen Komplexe können zur Polymerisation von Butadienen und Styrol eingesetzt werden.

Ein Verfahren zur Herstellung von Polydienen mit einem hohen 1,2-Mikrostrukturanteil werden in US 4,429,090 beschrieben. Das verwendete Katalysatorsystem enthält neben einem anionischen Initiator auf Basis von Lithium und einer Dialkylmagnesium- bzw. Trialkylaluminiumverbindung als weitere Komponente eine Oxolanylverbindung.

Bei der Polymerisation von Dienen bei hohen Monomerkonzentrationen und hohen Temperaturen ist die Stabilität der "lebenben" Polymerkettenenden häufig zu gering. In Kohlenwasserstoffen als Lösungsmittel treten bei höheren Temperaturen verstärkt Kettenübertragungsreaktionen oder Kettenabbruchsreaktionen auf. Diese, beispielsweise durch Lithiierung von Toluol oder durch Lithiumhydrid-Eliminierung hervorgerufenen Reaktionen beeinflussen das Molekulargewicht und die Molekulargewichtsverteilung der Polydiene.

Aufgabe der vorliegenden Erfindung war es, ein Verfahren zur anionischen Polymerisation von Dienen in Kohlenwasserstoffen als Lösungsmittel bereitzustellen, das die vorgenannten Nachteile nicht oder in geringerem Maße aufweist und insbesondere bei höheren Monomerkonzentrationen und höheren Temperaturen weniger Kettenübertragung und Kettenabbruch zeigt.

Demgemäß wurde ein Verfahren zur anionischen Polymerisation von Dienen in einem aliphatischen, isocyclischen oder aromatischen Kohlenwasserstoff oder Kohlenwasserstoffgemisch als Lösungsmittel in Gegenwart eines lithiumorganischen Polymerisac.ionsin.itiators und einer in dem Kohlenwasserstoff löslichen Dialkylmagnesiumverbindung im molaren Verhältnis von Mg/Li von größer als 0,8 gefunden, wobei man als Dialkylmagnesiumverbindung in-Butyl) (n-Octyl}magnesium einsetzt.

Für eine hohe Thermostabilität der "lebenden Polymerkettenenden" ist das Verhältnis von Mg/Li nach oben nicht begrenzt. Allerdings beobachtet man bei Mg/Li Verhältnissen größer 10 aufgrund des retardierenden Effektes eine für industrielle Verfahren zu geringe Polymerisationsgeschwindigkeit. Bevorzugt wählt man das molare Verhältnis von Mg/Li im Bereich von 1 bis 4, insbesondere im Bereich von 1 bis 3.

Als lithiumorganische Polymerisationsinitiatoren können die üblicherweise als anionische Polymerisationsinitiatoren eingesetzten mono-, bi- oder multifunktionellen Lithiumalkyle, -aryle oder -aralkyle verwendet werden. ZweckmäSigerweise werden lithiumorganische Verbindungen eingesetzt wie Ethyl-, Propyl-, isopropyl-, n-Butyl-, sec-Butyl-, tert.-Butyl-, Phenyl-, Diphenylhexyl-, Hexamethylendi-, Butadienyl-, Isoprenyl-, Polystyryllithium oder die multifunktionellen 1,4-Dilithiobutan, 1,4-dilithio-2-buten oder 1,4-Dilithiobenzol. Geeignete Polymerisationsinitiatoren sind weiterhin aus den oben genannten lithiumorganischen Verbindungen durch Umsetzung mit Styrol gewonnenes Polystyryllithium. Die benötigte Menge an Lithiumorganyl richtet sich nach dem gewünschten Molekulargewicht, der Art und Menge der weiteren, eingesetzten Dialkylmagnesiumverbindung sowie der Polymerisationstemperatur. In der Regel liegt sie im Bereich von 0,0001 bis 5 Molprozent bezogen auf Gesamtmonomerenmenge.

Geeignete Dialkylmagnesiumverbindungen sind solche der Formel R₂Mg, wobei die Reste R gleiche oder verschiedene C₁-C₂₀-Alkyl-Gruppen bedeuten. Bevorzugt werden die als Handelsprodukte verfügbaren Ethyl-, Propyl-, Butyl-, Hexyl- oder Octylverbindungen wie (n-Butyl)Ethylmagnesium oder Di(n-Hexyl)magnesium eingesetzt. Besonders bevorzugt wird das in Kohlenwasserstoffen lösliche (n-Butyl) (s-Butyl)magnesium (DBM) und (n-Butyl) (n-Octyl)magnesium (BOMAG) eingesetzt. Durch Zusatz geringer Mengen Aluminiumalkylen, wie Triethylaluminium, kann die Löslichkeit der Dialkylmagnesiumverbindungen erhöht werden. Beispielsweise eignet sich als in Kohlenwasserstoff lösliche Dialkylmagnesiumverbindung das Di(n-butyl)magnesium solubilisiert mit ca. 10 Gew.-% Triethylaluminium, bezogen auf die Dialkylmagnesiumverbindung.

Besonders bevorzugt wird sec-Butyllithium in Verbindung mit (n-Butyl) (n-Octyl)magresium verwendet.

Bevorzugt gibt man außer dem lithiumorganischen Polymerisationsinitiator und der Dialkylmagnesiumverbindung keine weiteren, die Polymerisation beeinflussenden Verbindungen in wirksamen Mengen zu. Beispiele für solche die Polymerisation beeinflussende Verbindungen sind Lewisbasen wie Ether, Alkoholate, Thiolate, Amine oder Amide.

Bevorzugt sind Barium- Calcium- oder Strontiumorganyle nur in unwirksamen Mengen vorhanden, die die Polymerisationsgeschwindigkeit oder Copolymerisationsparameter nur unwesentlich beeinflussen. Auch sollen Übergangsmetalle oder Lanthanoide, insbesondere Titan, oder Zirkon nicht in wesentlichen Mengen zugegen sein.

Der lithiumorganische Polymerisationsinitiator und die Dialkylmagnesiumverbindung können zusammen oder einzeln, zeitlich oder räumlich versetzt der Monomermischung zugegeben werden. Bevorzugt werden die Komponenten als vorgemischte Initiatorzusammensetzung verwendet.

Zur Herstellung der Initatorzusammensetzung können die Komponenten in einem inerten Kohlenwasserstoff, beispielsweise n-Hexan, Cyclohexan, Weißöl oder Toluol als Lösungsmittel gelöst und zusammengegeben werden. Vorzugsweise mischt man die in den Kohlenwasserstoffen gelösten Metallorganyle homogen und läßt mindestens 2 Minuten, bevorzugt mindestens 20 Minuten bei einer Temperatur im Bereich von 0 bis 120°C reifen. Gegebenenfalls kann hierzu ein Lösungsvermittler, beispielsweise Diphenylethylen zugegeben werden, um das Ausfallen einer der Komponenten aus dieser Initiatorlösung zu verhindern.

Bevorzugte Monomere sind Butadien, Isopren, 2,3-Dimethylbutadien, 1,3-Pentadien,1,3-Hexadiene oder Piperylen oder deren Mischungen.

Die Polymerisation kann in Gegenwart eines Lösungsmittels vorgenommmen werden. Als Lösungsmittel eignen sich die für die anionische Polymerisation üblichen aliphatischen, isocyclischen oder aromatischen Kohlenwasserstoffe mit 4 bis 12 Kohlenstoffatomen wie Pentan, Hexan, Heptan, Cyclohexan, Methylcyclohexan, Iso-Oktan, Benzol, Alkylbenzole wie Toluol, Xylol, Ethylbenzol oder Dekalin oder geeignete Gemische. Das Lösungsmittel sollte natürlich die verfahrenstypisch erforderliche hohe Reinheit aufweisen. Zur Abtrennung protonenaktiver Substanzen können sie beispielsweise über Aluminiumoxid oder Molekularsieb getrocknet und vor Verwendung destilliert werden. Vorzugsweise wird das Lösungsmittel aus dem Verfahren nach Kondensation und der genannten Reinigung wiederverwendet.

Die Monomerkonzentration ist hauptsächlich durch die Viskosität der erhaltenen Polymerlösung bei der entsprechenden Polymerisationstemperatur begrenzt. Im allgemeinen führt man die Polymerisation bei einer Monomerkonzentration von 15 bis 50 Gew.-%, bezogen auf die Monomerlösung durch.

Das erfindungsgemäße Verfahren zeichnet sich dadurch aus, daß man die Dienmonomeren bei relativ hoher Temperatur ohne übermäßige Kettenübertragung oder Kettenabbruchreaktionen durchführen kann. In der Regel polymerisiert man bei Temperaturen im Bereich von 40 bis 120°C.

Zur besseren Temperaturkontrolle und geringeren thermischen Belastung kann man das Dien in zwei oder mehreren Portionen zugeben und vor jeder Zugabe auf 60 bis 80°C temperieren.

Die Polymeren können in Gegenwart eines mehrfunktionellen Alkalimetallorganyls polymerisiert oder nach der Polymerisation mit einem mehrfunktionellen Kopplungsmittel, wie polyfunktionelle Aldehyde, Ketone, Ester, Anhydride oder Epoxide linear oder sternförmig verknüpft werden. Hierbei können durch Kopplung Blöcke gleicher oder verschiedener chemischer Zusammensetzung oder Molekulargewichten symmetrische und unsymmetrische, lineare oder sternförmige Polymere erhalten werden.

Die erhaltenen Polymeren können auch mit weiteren Monomeren, insbesondere Styrol zu Blockcopolymeren umgesetzt werden.

Nach Beendigung der Polymerisation können die lebenden Polymerketten mit einem Kettenabbruchmittel verschlossen werden. Als Kettenabbruchmittel eignen sich protonenaktive Substanzen oder Lewis-säuren wie beispielsweise Wasser, Alkohole, aliphatische und aromatische Carbonsäuren sowie anorganische Säuren wie Kohlensäure oder Borsäure.

### Beispiele:

### Beispiel 1 bis 4 (Vergleich):

In einem 500 ml Rührkessel, der mit einer UV-Vis-Zelle ausgestattet war, wurden 50 ml einer Polystyryl-Lithium-Initiatorlösung (PSLi) in Cyclohexan unter leichtem Stickstoffüberdruck eingefüllt und die Konzentration mittels UV ermittelt. Die Lösung wurde mit der entsprechenden Menge an (n-Butyl) (sec-butyl)magnesium versetzt. Anschließend wurde die für das theoretische Molekulargewicht benötigte Menge einer frisch destillierten 3-4 molaren Butadienlösung in Cyclohexan bei ca -30°C zugegeben und die Polymerisation bei einem Stickstoffüberdruck von 2 atm bei 40°C durchgeführt. Nach beendeter Polymerisation wurde mit entgastem Methanol abgebrochen. Das erhaltenen Polybutadien wurde in kaltem Methanol gefällt und das Filtrat bei 40°C für ca. 14 Stunden getrocknet. Der Umsatz wurde durch Auswiegen des getrockneten Polybutadien bestimmt.

### Vergleichsversuch VI

### Beispiel 1 wurde analog ohne Zusatz von DBM durchgeführt.

Die Initiatorkenzentrationen, theoretischen und mittels Gelpermeationschromatographie ermittelten zahlenmittleren Molekulargewichte Mₙ und Molekulargewichtsverteilung M_{w}/Mₙ für die Beispiele 1 bis 4 und den Vergleichsversuch sind in Tabelle 1 zusammengefaßt. Daten zur Mikrostruktur sind ebenfalls in Tabelle 1 zusammengestellt. Die Konzentration der lebenden Polybutadienketten (PBLi) entspricht der Konzentration des vorgelegten Polystyryllithiuminitiators (PSLi).

Die theoretischen zahlenmittleren Molekulargewichte wurden unter Annahme einer Initiierung nur durch das vorgelegte Polystyryllithium (PSLi) (a) bzw. durch das vorgelegte Polystyryllithium und (n-Butyl) (sec-butyl)magnesium (PSLi + DBM) (b) berechnet.

### Beispiel 5:

Analog Beispiel 1 erfolgte die Polymerisation von Bucadien unter Verwendung von (n-Butyl) (n-octyl)magnesium (BOMAG) anstelle von (n-Butyl) (sec-butyl)magnesium (DEM). Initiatorkonzentration und Ergebnisse sind in Tabelle 2 zusammengefaßt.

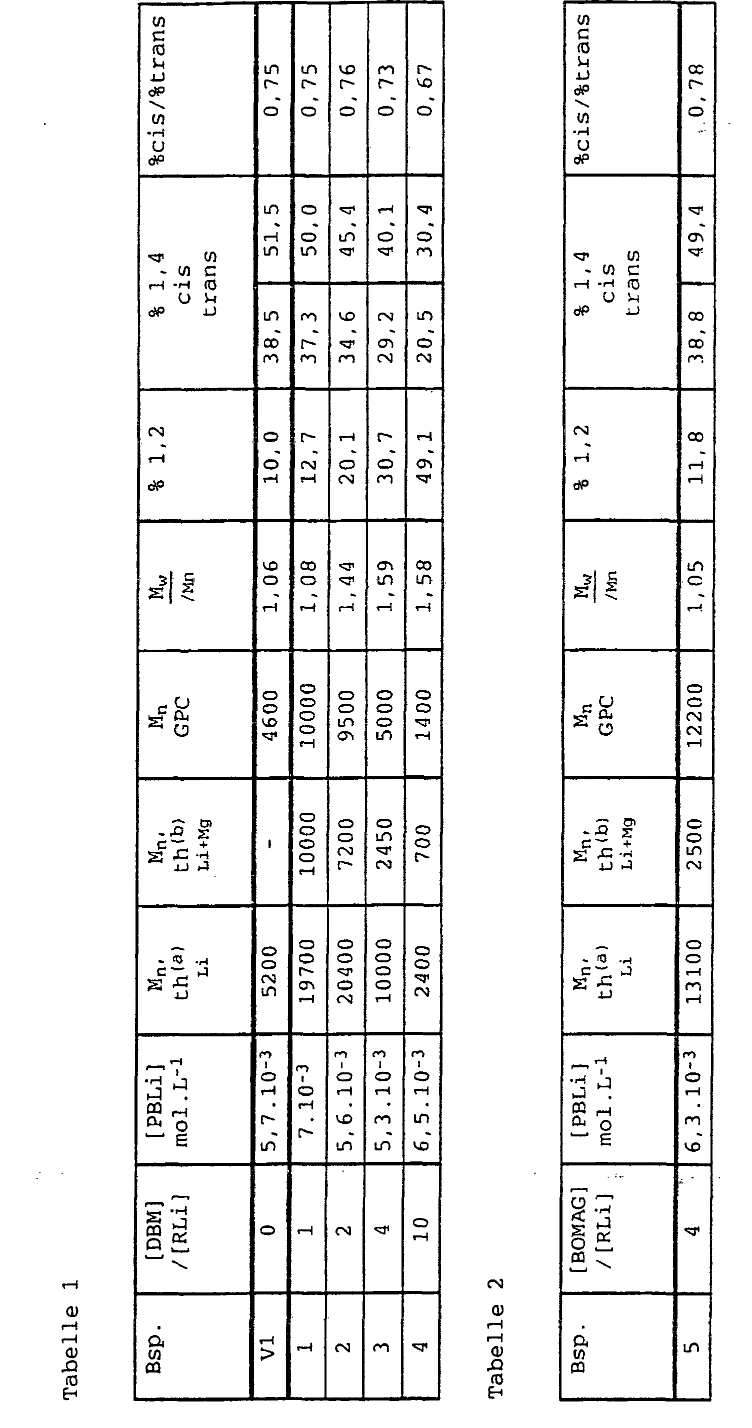

## Patentansprüche

1. Verfahren zur anionischen Polymerisation von Dienen in einem aliphatischen, isocyclischen oder aromatischen Kohlenwasserstoff oder Kohlenwasserstoffgemisch als Lösungsmittel in Gegenwart eines lithiumorganischen Polymerisationsinitiators und einer in dem Kohlenwasserstoff löslichen Dialkylmagnesiumverbindung im molaren Verhältnis von Mg/Li von größer als 0,8, **dadurch gekennzeichnet, daß** man als Dialkylmagnesiumverbindung (n-Butyl)(n-octyl)magnesium einsetzt.

2. Verfahren nach Anspruch 1, **dadurch gekennzeichnet, daß** man das molare Verhältnis von Mg/Li im Bereich von 1 bis 4 wählt.

3. Verfahren nach Anspruch 1 oder 2, **dadurch gekennzeichnet, daß** man bei einer Monomerkonzentration von 15 bis 50 Gew.-%, bezogen auf die Monomerlösung, polymerisiert.

4. Verfahren nach einem der Ansprüche 1 bis 3, **dadurch gekennzeichnet, daß** man außer dem lithiumorganischen Polymerisationsinitiator und der Dialkylmagnesiumverbindung keine weiteren, die Polymerisation beeinflussenden Verbindungen in wirksamen Mengen zugibt.

5. Verfahren nach einem der Ansprüche 1 bis 4, **dadurch gekennzeichnet, daß** man als Polymerisationsinitiator sec-Butyllithium verwendet.

6. Verfahren nach einem der Ansprüche 1 bis 5, **dadurch gekennzeichnet, daß** man als Dien Butadien oder Isopren oder Mischungen davon verwendet.

7. Verfahren nach einem der Ansprüche 1 bis 6, **dadurch gekennzeichnet, daß** man die Polymerisation durch Zugabe einer protischen Substanz oder eines Kopplungsmittels beendet.

8. Verfahren nach einem der Ansprüche 1 bis 7, **dadurch gekennzeichnet, daß** man bei Temperaturen im Bereich von 40 bis 120°C polymerisiert.

9. Verfahren nach einem der Ansprüche 1 bis 8, **dadurch gekennzeichnet, daß** man das Dien in zwei oder mehreren Portionen zugibt und vor jeder Zugabe auf 60 bis 80°C temperiert.

## Claims

1. A process for the anionic polymerization of dienes dissolved in an aliphatic, isocyclic or aromatic hydrocarbon or hydrocarbon mixture in the presence of an organolithium polymerization initiator and a dialkylmagnesium compound which is soluble in the hydrocarbon in a molar Mg/Li ratio of more than 0.8, which comprises using (n-butyl)(n-octyl)magnesium as the dialkylmagnesium compound.

2. A process as claimed in claim 1, wherein the molar Mg/Li ratio is in the range from 1 to 4.

3. A process as claimed in claim 1 or 2, wherein the polymerization is carried out at a monomer concentration of 15-50% by weight, based on the monomer solution.

4. A process as claimed in any of claims 1 to 3, wherein, apart from the organolithium polymerization initiator and the dialkylmagnesium compound, no other compounds which have an effect on the polymerization are added in effective amounts.

5. A process as claimed in any of claims 1 to 4, wherein the polymerization initiator used is sec-butyllithium.

6. A process as claimed in any of claims 1 to 5, wherein the diene used is butadiene or isoprene or a mixture thereof.

7. A process as claimed in any of claims 1 to 6, wherein the polymerization is terminated by adding a protic substance or a coupling agent.

8. A process as claimed in any of claims 1 to 7, wherein the polymerization is carried out at from 40 to 120°C.

9. A process as claimed in any of claims 1 to 8, wherein the diene is added in two or more portions and the mixture is brought to 60-80°C prior to each addition.

## Revendications

1. Procédé de polymérisation anionique de diènes dans un hydrocarbure ou mélange d'hydrocarbures aliphatiques, isocycliques ou aromatiques, comme solvant, en présence d'un amorceur de polymérisation organique à base de lithium et d'un composé de dialkyl-magnésium soluble dans l'hydrocarbure dans un rapport molaire de Mg/Li supérieur à 0,8, **caractérisé en ce qu'**on met en oeuvre, comme composé de dialkyl-magnésium, du (n-butyl)-(n-octyl)magnésium.

2. Procédé suivant la revendication 1, **caractérisé en ce qu'**on choisit le rapport molaire Mg/Li dans la gamme de 1 à 4.

3. Procédé suivant l'une des revendications 1 et 2, **caractérisé en ce qu'**on polymérise à une concentration en monomère de 15 à 50% en poids, par rapport à la solution de monomère.

4. Procédé suivant l'une des revendications 1 à 3, **caractérisé en ce que**, à l'exception de l'amorceur de polymérisation organique à base de lithium et du composé de dialkyl-magnésium, on n'ajoute pas d'autres composés influençant la polymérisation en quantités actives.

5. Procédé suivant l'une des revendications 1 à 4, **caractérisé en ce que**, comme amorceur de polymérisation, on utilise du sec-butyl-lithium.

6. Procédé suivant l'une des revendications 1 à 5, **caractérisé en ce que**, comme diène, on utilise du butadiène ou de l'isoprène ou leurs mélanges.

7. Procédé suivant l'une des revendications 1 à 6, **caractérisé en ce qu'**on achève la polymérisation par addition d'une substance protique ou d'un agent de couplage.

8. Procédé suivant l'une des revendications 1 à 7, **caractérisé en ce qu'**on polymérise à des températures de l'ordre de 40 à 120°C.

9. Procédé suivant l'une des revendications 1 à 8, **caractérisé en ce qu'**on ajoute le diène en deux ou plusieurs portions et **en ce qu'**avant chaque addition, on amène à une température de 60 à 80°C.
